# EUROPÄISCHE PATENTSCHRIFT

(11) **EP 0 694 706 B1**
(45) Veröffentlichungstag und Bekanntmachung des Hinweises auf die Patenterteilung: **30.09.1998**
(21) Anmeldenummer: 95810192.5
(22) Anmeldetag: 21.03.1995
(51) Int. Cl.: F16D 43/208

(54) **Adaptive Rutschkupplung**
Adaptive overload coupling
Accouplement adaptif à limitation de couple

(30) Priorität: 25.07.1994 DE 4426305
(43) Veröffentlichungstag der Anmeldung: 31.01.1996
(73) Patentinhaber: HILTI Aktiengesellschaft, 9494 Schaan (LI)
(72) Erfinder: Miescher, Stefan, FL-9492 Eschen (LI)
(74) Vertreter: Wildi, Roland

(56) Entgegenhaltungen:
- CH-A- 411 591
- DE-A- 3 626 347
- DE-B- 1 211 874
- FR-A- 915 979
- FR-A- 2 398 218
- US-A- 4 081 062
- US-A- 4 093 055

## Beschreibung

Die Erfindung betrifft eine Überlast-Rutschkupplung, bei der die Drehmomentübertragung zwischen Antrieb und Abtrieb über einen durch ein vorgespanntes Federelement erzeugten Kraftschluß erfolgt, insbesondere zum Einsatz bei Bohrgeräten.

Beim Gebrauch von Bohrgeräten, wie Bohrmaschinen, Bohrhämmern und Diamantbohrgeräten können - bedingt durch den Untergrund - hohe Drehmomente auftreten. Das maximal zulässige Drehmoment für einen Maschinentyp der genannten Art läßt sich relativ genau definieren. Die Wirkung des Drehmoments auf die Maschine einerseits und, besonders bei handgeführten Geräten, auf den Anwender andererseits, kann jedoch sehr unterschiedlich sein. Steht der Anwender auf einer Leiter und bedient das Gerät mit einer Hand, so bringt er weniger Gegenmoment auf, als wenn er auf dem Boden stehend sich mit dem ganzen Körper gegen das Bohrgerät stemmt. Bei einem zähen Untergrund steigt das Drehmoment ersichtlicherweise langsamer an als bei einem "Eisentreffer". In ungünstigen Anwendungs- und Standsituationen kann schon eine sehr geringe Drehmomentveränderung, insbesondere ein Reaktionsmoment zu folgenschweren Unfällen führen.

Als Schutz gegen ein zu hohes Drehmoment ist es bekannt. Rutsch- oder Rastkupplungen einzusetzen, deren Auslegung ein Kompromiß zwischen Anwender- und Maschinenschutz ist. Das Resultat dieses Kompromisses ist jedoch unbefriedigend. da Überlastkupplungen bekannter Bauart, wenn der Leistungsbereich der Maschine voll nutzbar bleiben soll, im Falle eines Blockierens des Bohrers aufgrund des am Bohrgerät auftretenden Reaktionsmoments zu den erwähnten Arbeitsunfällen führen kann.

Aus der US-A-4,081,062 ist eine Überlast-Rutschkupplung bekannt, bei der die Drehmomentübertragung zwischen einem wellenförmigen Antriebselement und erzeugt wird. Die Feder ist in der topfartig ausgebildeten Abtriebswelle angeordnet und presst einen Kolben gegen die Stirnfläche des Antriebselements. Das wellenförmige Antriebselement weist seinen Umfang überragende Führungsstifte auf, die in Kulissenbahnen in der Innenwandung eines der Abtriebswelle zugehörigen Verschlussteiles geführt sind. Die Kulissenbahnen münden in einem erweiterten Freilaufbereich. Der federbelastete Kolben drückt gegen die Stirnfläche des Antriebselements und presst die Führungsstifte gegen die Begrenzungswandungen der Kulissenbahnen. Bei Überschreitung eines voreinstellbaren Auslösemoments gleiten die Führungsstifte entlang der Kulissenbahnen, bis sie in einen erweiterten Freilaufbereich gelangen. Dort angelangt kann sich das Antriebselement frei gegenüber der Abtriebswelle drehen und es wird kein Drehmoment übertragen. Damit die Führungsstifte wieder in Eingriff mit den Kulissenbahnen kommen, muss die Drehrichtung des Antriebselements umgekehrt werden. Das Auslösemoment dieser bekannten Überlast-Rutschkupplung ist durch die Vorspannung der Feder, die den Kolben beaufschlagt, bestimmt. Es ist veränderbar, indem die Vorspannung der Feder verändert wird. Dazu weist die topfartige Abtriebswelle ein zylindrisches Basisteil und ein Hülsenteil auf, das über eine Gewindeverbindung mit dem Basisteil verschraubt ist. Radiale Fixierschrauben gewährleisten eine drehfeste Kopplung der beiden verschraubten Teile. Indem das Hülsenteil mehr oder weniger weit auf das Basisteil aufgeschraubt wird, kann die Gesamtbaulänge der topfartigen Abtriebswelle verändert werden, und ist die Vorspannung der innerhalb der Abtriebswelle angeordneten Feder einstellbar. Mit Hilfe der Fixierschrauben erfolgt die drehfeste Kopplung des Hülsenteils und des Basisteils in der jeweils relativ zueinander eingestellten Position.

Die in der US-A-4,081,062 beschriebene Überlast-Rutschkupplung unterscheidet sich von den bekannten Rutsch- oder Rastkupplungen nur dadurch, dass ihr Auslösemoment voreinstellbar ist. Auf diese Weise kann ein hohes oder ein niedrigeres Auslösemoment eingestellt werden, je nachdem, ob der Schutz des Anwenders oder der Schutz der Maschine im Vordergrund steht. Jedoch besteht keine Möglichkeit, das Auslösemoment der Überlast-Rutschkupplung an die im Betrieb gerade herrschenden Bedingungen anzupassen, um dadurch einerseits den vollen Leistungsbereich der Maschine ausnutzen zu können und gleichzeitig dem Anwender einen möglichst grossen Schutz zu bieten.

Um Störfälle aufgrund des Blockierens des Werkzeugs rechtzeitig zu erkennen und Gegenmaßnahmen, beispielsweise durch Unterbrechen des Antriebsstrangs von der Maschine zum Werkzeug über eine rasch wirkende elektromagnetische Kupplung auszulösen, sind verschiedene Lösungen bekannt, welche die Gefahr abwenden sollen, bevor der Anwender geschädigt wird. In der Regel handelt es sich um mechano-elektronische

oder elektromechanische Lösungen, bei denen durch einen massebehafteten Sensor eine über einer vorgegebenen Schwelle liegende Beschleunigungskomponente am Gerätegehäuse aufgrund des Reaktionsmoments oder eine Geschwindigkeitskomponente erfaßt, in ein elektrisches Slgnal umgesetzt und zur Auslösung der erwähnten Trennkupplung genutzt wird. Beispiele für solche elektromagnetische Lösungen mit Geschwindigkeitssensoren sind in DE 33 46 215 A1 und WO-DE 88-00 109 beschrieben, und in einer modernen Lösung mit Beschleunigungssensor und Digitalelektronik in der DE-Patentanmeldung P 43 44 817.8 vorgeschlagen worden. Bei all diesen elektromechanischen oder mechano-elektronischen Lösungen erfaßt eine Sensorik Größen wie z.B. die Drehbeschleunigung, einen rasch ansteigenden Stromwert, ein steigendes Drehmoment etc. Die Elektronik erkennt den Störfall sobald die Sensorsignale bestimmte Grenz- oder Schwellwerte überschreiten und/oder aufgrund von vorgespeicherten Prozeßverlaufkenntnissen. Eine Aktronik wendet dann die gefährlichen Folgen des Störfalls durch geeignete Maßnahmen wie Abkuppeln oder Abbremsen des Antriebsmotors ab.

Alle bekannten oder die vorgeschlagene Lösung(en) benötigen außer der Sensorik eine elektronische Erkennungs-, Aufbereitungs- und Verstärkerschaltung.

Der Erfindung liegt die Aufgabe zugrunde, eine zu den bekannten oder vorgeschlagenen elekromechanischen oder mechano-elektronischen Lösungen kostengünstige rein mechanische alternative Lösung zu finden.

Diese Lösung erfolgt bei einer Überlast-Rutschkupplung der eingangs genannten Art mit den im Kennzeichnenden Teil des Patentanspruchs 1 angeführten Merkmalen.

Im Vergleich zu den bekannten elektromechanischen oder mechano-elektronischen Lösungen beruht die erfindungsgemäße adaptive Rutschkupplung auf einem anderen Funktionsprinzip. Es handelt sich um eine rein mechanisch wirkende Rutschkupplung deren Auslösemoment einstellbar ist. Das Einstellen dieses Auslösemoments erfolgt automatisch in Abhängigkeit vom jeweils anliegenden Arbeitsdrehmoment. Das Auslösemoment stellt sich jeweils etwas höher ein als das anliegende Drehmoment, so daß es im normalen Betriebsfall nicht zu einem Auslösen der Rutschkupplung kommt.

Vorzugsweise wirkt das mit der trägen Masse oder ein adaptive Dämpfung behaftete Antriebselement über ein Bewegungsgewinde ohne Selbsthemmung oder über eine Kulissenverbindung formschlüssig auf die Antriebswelle. Wie sich in weiteren Einzelheiten aus der nachfolgenden Beschreibung ersehen läßt, ist es vorteilhaft die beiden Wellen einander überlappend koaxial zu führen, wobei die Abtriebswelle in die Antriebswelle eingepaßt ist und die Rastmittel aus durch auf der Abtriebswelle gehaltene, in Form einer Ringschulter angeordnete Kugeln, Walzen oder dergleichen bestehen, welche das überlappende Ende der Antriebswelle durchsetzen, wobei die Vorspannfeder über einen Druckring auf die Ringschulter drückt.

Die Erfindung und vorteilhafte Einzelheiten werden nachfolgend unter Bezug auf die Zeichnung in beispielsweisen Ausführungsformen näher erläutert. Es zeigen:
- **Fig. 1**: ein Betriebs-Verlaufsdiagramm des tatsächlichen Drehmoments mit einer mit einstellbarem Sicherheitsabstand darübergezeichneten Kurve des zeitlichen Verlaufs des Auslösemoments beim Arbeiten mit einem Bohrgerät, das mit einer erfindungsgemäßen adaptiven Rutschkupplung ausgestattet ist;
- **Fig. 2**: ein Meßdiagramm des Verlaufs des Drehmoments bzw. des Auslösemoments eines mit einer adaptiven Rutschkupplung gemäß der Erfindung ausgerüsteten Bohrgeräts;
- **Fig. 3**: ein den Diagrammen der Fig. 1 bzw. 2 entsprechendes Diagramm zur Verdeutlichung der Auslösung der adaptiven Rutschkupplung beim Auftreten eines Störfalls, beispielsweise beim Blockieren eines Bohrers;
- **Fig. 4**: eine Prinzipskizze zur Erläuterung des Funktionsprinzips einer erfindungsgemäßen adaptiven Rutschkupplung;
- **Fig. 4a und 4b**: zwei schematische Vektordiagramme einzelner Kraft-Axialkomponenten;
- **Fig. 5 und Fig. 6**: zwei Ausführungsbeisptele für eine adaptive Rutschkupplung erfindungsgemäßer Bauart; und
- **Fig. 7**: die Schnittdarstellung eines erprobten konkreten Ausführungsbeispiels für eine adaptive Rutschkupplung erfindungsgemäßer Bauart.

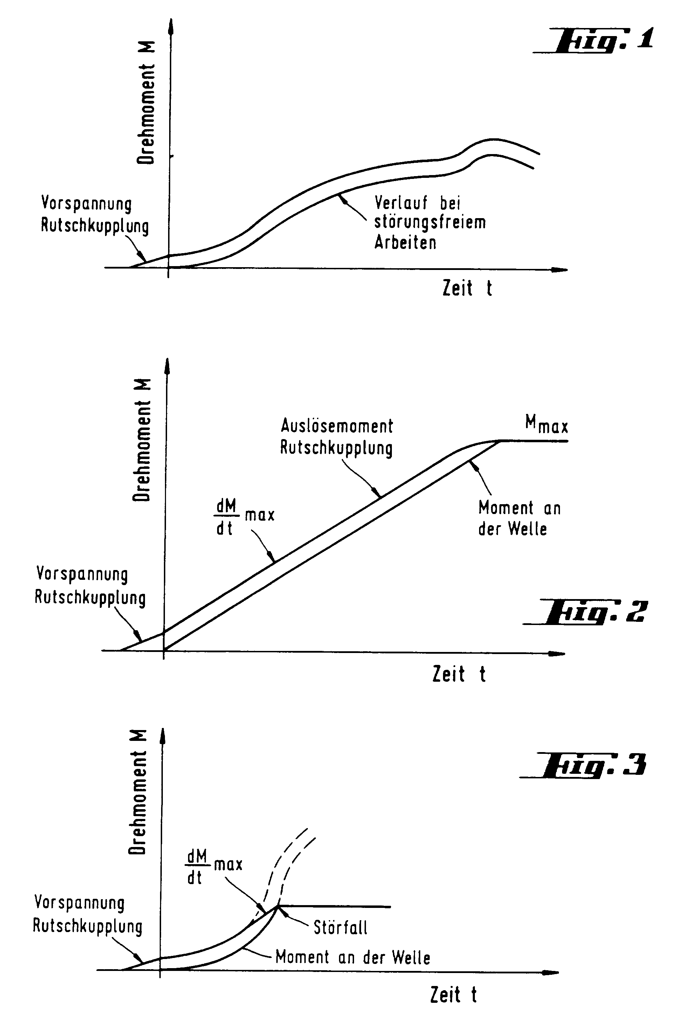

Im Moment-Zeit-Diagramm der Fig. 1 verdeutlicht die untere Kurve einen möglichen konkreten Verlauf des Drehmoments an einem Bohrgerät bei störungsfreiem Verlauf. Die obere Kurve veranschaulicht das über die adaptive Rutschkupplung maximal übertragbare Drehmoment, wobei der Verlauf dieses Auslösemoments oder maximalen Drehmoments bis zu einem maximal zulässigen Wert Mmax (vergleiche Fig. 2) dem Verlauf des Arbeitsdrehmoments folgt, weil aufgrund der Erfindung das Auslösemoment an der Rutschkupplung mit einer wähl- oder einstellbaren Verstellgeschwindigkeit folgt. Ersichtlicherweise stellt sich das Auslösemoment jeweils etwas höher ein als das anliegende Drehmoment, so daß es, wie erwähnt, im Normalfall nicht zu einem Auslösen der Kupplung kommt, wie die Fig. 1 erkennen läßt.

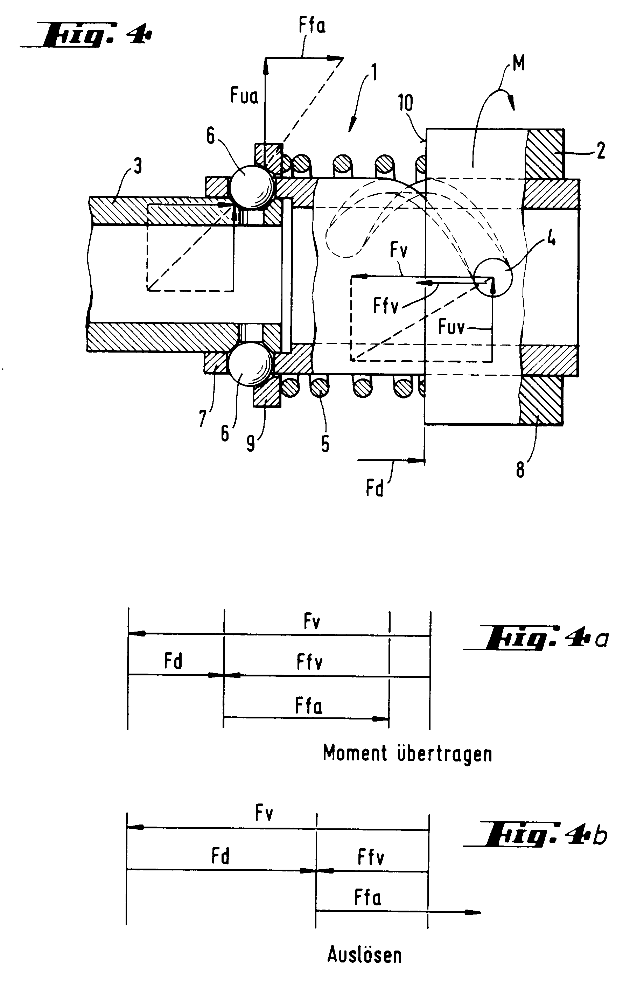

Durch bestimmte Maßnahmen gemäß der Erfindung, die weiter unten erläutert werden, kann die Verstellgeschwindigkeit begrenzt werden, wie das Diagramm der Fig. 2 verdeutlicht. Erfolgt der Drehmomentanstieg schneller als es die maximale Verstellgeschwindigkeit zuläßt, z.B. bei einem Verklemmen oder Blockieren des Werkzeugs, so wird die Auslöseschwelle überfahren, bevor die adaptive Rutschkupplung die Möglichkeit hat, eine Anpassung an die aktuelle Situation vorzunehmen, was im Diagramm der Fig. 3 verdeutlicht ist. Im genannten Störfall wird die Rutschkupplung also auslösen und den Arbeitsstrang vom Antriebsmotor zum Werkzeug schlagartig unterbrechen, so daß der Gerätebenutzer geschützt ist.

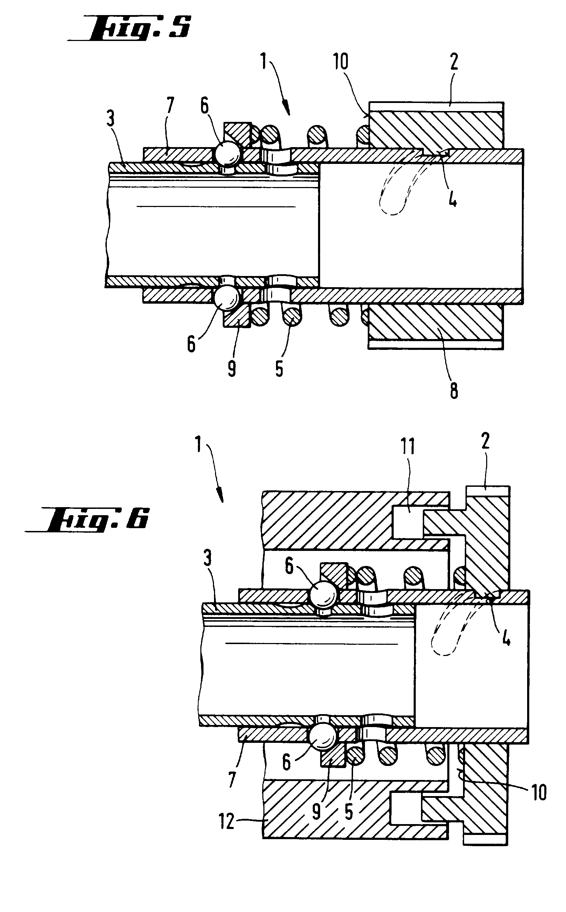

Das konstruktive Grundprinzip der erfindungsgemäßen adaptiven Rutschkupplung 1 ist zunächst durch die Fig. 4 veranschaulicht. Wie bei Rutsch- oder Rastkupplungen ähnlicher Konstruktion bekannt, erfolgt die Drehmomentübertragung zwischen einem Antriebsteil 2 (z. B. Ritzel) und einem Abtriebsteil 3 über einen Kraftschluß, der durch eine gegen ein Halte- oder Rastmittel 6 vorgespannte Feder 5 erzeugt wird. Bei herkömmlichen Rutsch- oder Rastkupplungen dieser. Art bleibt das Auslösemoment bzw. das übertragbare Moment M annähernd konstant.

Bei der adaptiven Rutschkupplung gemäß der Erfindung wird nun die Vorspannung der Feder 5 gesteuert. Zu diesem Zweck ist die Antriebs- oder Abtriebswelle im Arbeitsstrang zum (nicht dargestellten) Werkzeug zweiteilig ausgeführt; sie besteht, wie die Fig. 4 bis 7 erkennen lassen, beispielsweise aus zwei koaxial zueinander geführten Hohlwellen oder Wellenteilen. In den dargestellten Ausführungsbeispielen ist das abtriebsseitige Wellenteil 3 innerhalb des antriebsseitigen Wellenteils 7 geführt. Die beiden Wellenteile 3, 7 lassen sich also relativ zueinander verdrehen. Über ein Bewegungsgewinde, eine Kulissenführung oder dergleichen am antriebsseitigen Wellenteil 7, die nachfolgend einheitlich als Führung 4 bezeichnet ist, greift das Antriebsteil 2 (etwa ein Zahnrad oder eine Führungshülse 22 im Falle der Fig. 7) am antriebsseitigen Wellenteil 7 an. Das Antriebsteil 2 (Zahnrad, Führungshülse) drückt mit einer dem abtriebsseitigen Wellenteil 3 und damit dem Werkzeug zugewandten Stirnfläche 10 auf die Feder 5, die damit aufgrund der axialen Verschieblichkeit zwischen dem antriebsseitigen Wellenteil 7 und dem Antriebsteil 2 als Komponente einer über die Führung 4 wirkenden Drailbewegung, je nach dem wirkenden Drehmoment M, mehr oder weniger stark gegen den Anschlag bzw. das Halte - oder Rastmittel 6, das mit dem abtriebsseitigen Wellenteil 3 verbunden ist, gepreßt wird. Durch die axiale Relativverschieblichkeit der Teile 2 und 7 zueinander aufgrund der Führung 4, wird durch das anliegende Drehmoment die Feder 5 mehr oder weniger gespannt und damit das Auslösemoment der Rutschkupplung in Anpassung an das am Wellenteil 3 verlangte Moment eingestellt.

In die Prinzipdarstellung einer erfindungsgemäßen adaptiven Rutschkupplung 1 gemäss Fig. 4 sind außerdem einige Kraft-Vektordiagramme eingezeichnet, die für ein bestimmtes wirkendes Drehmoment M an bestimmten Wirkungspunkten der Kupplung als axial bzw. in Umfangsrichtung wirkende Kraftkomponenten dargestellt sind.

Um das Kraft- bzw. Momentübertragungsverhalten des adaptiven Kupplungssystems gemäß Fig. 4 im Falle der Momentübertragung, d.h. bei störungsfreiem Arbeiten (vgl. Fig. 1) bzw. im Moment des Auslösens (vgl. Fig. 3) zu verdeutlichen, sind zwei Vektordiagramme (Fig. 4a/4b) einzelner Kraft-Axialkomponenten schematisch dargestellt, die im folgenden erläutert werden:

Die am Verstell- bzw. Antriebselement 2 aufgrund des Moments M wirkenden Kraftkomponenten lassen sich in eine axiale Verstellkraft Fv und eine Umfangskraft Fuv zerlegen. Der Axialkomponente Fv wirkt eine Trägheits- oder Dämpfungskraft Fd entgegen. Diese Kraftkomponente Fd ist je nach Betriebssituation unterschiedlich groß; sie bleibt wie die Figuren 1 und 2 sowie das Vektordiagramm der Fig. 4a verdeutlicht, bei störungsfreiem Arbeiten etwa konstant. Die auf die Feder 5 übertragene Axialkraft Ffv ergibt sich damit zu Ffv = (Fv - Fd). Bei Momentübertragung auf das abtriebsseitige Wellenteil 3 ergibt sich damit eine errechenbare Federkraft Ffa aufgrund des Moments am Ausrastmechanismus, über den die Momentübertragung zwischen den Wellenteilen 7 und 3 erfolgt. Die Umfangskraft am Ausrastmechanismus ist mit Fua bezeichnet. Die Größe der Federkraft-Axialkomponente Ffv wird gemäß dem Grundprinzip der Erfindung über die axiale Relativverschiebung des Antriebselements 2 mittels der in Fig. 4 nur schematisch angedeuteten Führung 4 (Kulisse) verändert.

Im Falle einer Störung. d.h. beispielsweise bei einem "Eisentreffer" blockiert das Wellenteil 3. Aufgrund von Massenträgheit bzw. einer eingebauten Dämpfung vermag die Federkraftkomponente Ffv dem verlangten Drehmomentanstieg nicht zu folgen. Die axial wirkende Trägheits- oder Dämpfungskomponente Fd steigt schlagartig an, so daß die axiale Federkraftkomponente Ffa aufgrund des starken Anstiegs des am abtriebsseitigen Wellenteil 3 verlangten Moments zur Kraftübertragung nicht mehr ausreicht und dadurch der Kupplungsmechanismus zwischen dem Druckring 9 und dem Rastmittel 6 auslöst, so daß die Kraftübertragung vom Geräteantrieb auf das abtriebsseitige Wellenteil 3 schlagartig unterbrochen ist (Fig. 4b).

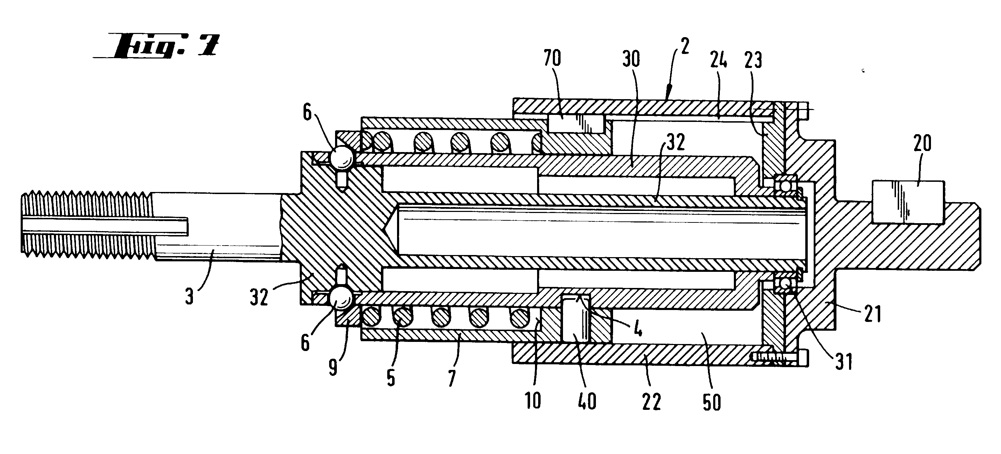

Wie die Fig. 5 und 6 erkennen lassen, kann das Halte- oder Rastmittel 6 für die Feder 5 am abtriebsseitigen Wellenteil 3 durch einen im Mantel des abtriebsseitigen Wellenteils 3 gelagerten, federvorbelasteten Kugelkranz gebildet sein, welcher den überlappenden Hohlwellenabschnitt des antriebsseitigen Wellenteils 7 durchsetzt und als Abstützung für einen gegen die Kugeln des Rastmittels 6 abgeschrägten Druckrings 9 dient, gegen den das demAntriebsteil 2 gegenüberliegende Ende der vorgespannten Feder 5 drückt. Die kraftschlüssige Kupplung mit adaptiver Einstellung durch die unterschiedliche Vorspannung der Feder 5 besteht also zwischen der abgeschrägten unteren Innenfläche des Druckrings 9 und den im abtriebsseitigen Wellenteil 3 gelagerten Kugeln des Halte- oder Rastmittels 6. Eine Kraftübertragung ist in äquivalenter Ausführung auch über Rollen, Walzen, eine drehmomentabhängige auslösende Verzahnung oder rein reibschlüssig möglich.

Wie oben erwähnt soll die Auslegung des adaptiven Kupplungssystems jeweils ein Auslösemoment ermöglichen, welches höher ist als das anliegende Drehmoment. Dies erfolgt, wie erwähnt, durch axiale Relativverschiebung zwischen dem Antriebsteil und dem Wellenteil 7 bei gleichzeitig unterschiedlicher Einstellung der kraftschlüssigen (oder reibschlüssigen) Kupplungsverbindung durch drehmomentabhängige Vorspannung der Feder 5. Dadurch wird gewährleistet, daß sich die Rutschkupplung im Normalfall bei steigendem Drehmoment nachspannt, anstatt - wie beim Stand der Technik solcher Rutschkupplungen - bei einem bestimmten Drehmoment auszulösen.

Erfindungsgemäß ist jedoch die Verstellgeschwindigkeit für die Anpassung des Drehmoments begrenzt, was z.B. durch Auslegung des Verstell- oder Antriebselements 2 mit einer bestimmten Masse 8, also durch Massenträgheit erreicht werden kann. Dazu alternativ kann, wie die Flg. 6 erkennen läßt, das Antriebselement 2 mit einer Dämpfung 11 durch Volumenverdrängung gekoppelt werden, die gegebenenfalls erst ab einem bestimmten Antriebsmoment wirksam wird. In Fig. 6 ist das nur schematisch angedeutete Dämpfungsbauteil 12 gehäusefest.

Das erprobte Labormuster-Ausführungsbeispiel einer erfindungsgemäßen adaptiven Rutschkupplung zeigt die Fig. 7. Bei dieser Ausführungsform besteht das Antriebsteil 2 aus einer Keilwelle 20 mit Flanschansatz 21, bei der zur innenseitigen Halterung eines Kugellagers 31 für das abtriebseitige Wellenteil 3 ein verschraubter Gegenflansch 23 vorhanden ist, der seinerseits vorzugsweise durch die gleiche Verschraubung mit eine Führungshülse 22 zur Drehmomentübertragung verbunden ist. Die Führungshülse 22 weist innenseitig eine Gleitnut 24 auf, in der ein Mitnahmekeil 70 in Axialrichtung verschieblich eingreift, der fest mit dem als ein Stellring 7 ausgebildeten antriebsseitigen Wellenteil 7 verbunden ist. Die Axialverschiebung des als Stellring ausgebildeten Wellenteils 7 erfolgt über die Führung 4 (Kulisse) in die ein mit dem Stellring verbundener Gleitzapfen 40 eingreift. Als Dämpfung wirkt ein Luftvolumen 50 im Bereich zwischen der Innenfläche des Flanschteils 23 und der gegenüberliegenden Stirnfläche des Stellrings.

Wie bei den beiden erstbeschriebenen Ausführungsbeispielen der Figuren 5 und 6 ist das Rastmittel 6, auf das sich der Druckring 9 abstützt, wiederum als Ring von federvorbelasteten Kugeln ausgebildet, die einerseits in einem hohlwellenartigen Kernabschnitt 32 des abtriebseitigen Wellenteils 3 abgestützt sind und andererseits einen umgebenden Hülsenabschnitt 30 durchsetzen, in dem die Führung 4 (Kulisse) ausgebildet ist.

Die erfindungsgemäße rein mechanische Lösung zum Schutz des Anwenders von insbesondere handgeführten Bohrgeräten gegen die Folgen eines unerwartet stark ansteigenden Reaktionsmoments mittels einer adaptiven Rutschkupplung mit selbsteinstellendem Auslösemoment bietet bei hoher Betriebssicherheit eine für viele Anwendungsfälle vorteilhafte Alternative zu den eingangs erwähnten Mechatroniklösungen bzw. elektromechanischen Lösungen.

## Patentansprüche

1. Überlast-Rutschkupplung, bei der die Drehmomentübertragung zwischen einem Antriebselement (2) und einer Abtriebswelle (3) über einen Kraftschluss erfolgt, der durch eine vorgespannte Feder (5), deren Federkraft einstellbar ist, erzeugt wird, **dadurch gekennzeichnet**, dass das Antriebselement (2) mit einer Antriebswelle (7) zusammenwirkt, die koaxial zur Abtriebswelle (3) geführt und durch ein zwischen den beiden Wellen (3, 7) vorgesehenes Rastmittel (6) kraftschlüssig mit der Abtriebswelle (3) verbunden ist, wobei das Rastmittel (6) von der vorgespannten Feder (5) belastet ist, die sich einerseits am Antriebselement (2) und andererseits am Rastmittel (6) abstützt, und die Vorspannkraft der Feder (5) durch eine axiale Verschiebung des auf der Antriebswelle (3) geführten Antriebselements (2) während des Betriebs, nach Massgabe des anliegenden Antriebsdrehmoments einstellbar ist.

2. Überlast-Rutschkupplung nach Anspruch 1, **dadurch gekennzeichnet**, daß das Antriebselement (2) oder die Antriebswelle (7) mit einer vorgegebenen trägen Masse (8) ausgestattet ist.

3. Überlast-Rutschkupplung nach Anspruch 1, **dadurch gekennzeichnet**, daß die axiale Verschiebbarkeit zwischen dem Antriebselement (2) und der Antriebswelle (7) durch eine Dämpfung (11; 50) belastet ist.

4. Überlast-Rutschkupplung nach einem der vorstehenden Ansprüche, **dadurch gekennzeichnet**, daß das Antriebselement (2) über eine Führung (4) auf die Antriebswelle (7) wirkt.

5. Überlast-Rutschkupplung nach Anspruch 4, **dadurch gekennzeichnet**, daß die Führung (4) ein Bewegungsgewinde ohne Selbsthemmung ist.

6. Überlast-Rutschkupplung nach Anspruch 4, **dadurch gekennzeichnet**, daß die Führung (4) eine Kulisse ist.

7. Überlast-Rutschkupplung nach einem der vorstehenden Ansprüche, **dadurch gekennzeichnet**, daß die beiden Wellen (3, 7) einander überlappen koaxial geführt sind, wobei die Abtriebswelle (3) in die Antriebswelle (7) eingepaßt ist.

8. Überlast-Rutschkupplung nach einem der vorstehenden Ansprüche, **dadurch gekennzeichnet**, daß das Rastmittel (6) als durch Kugeln, Rollen oder Walzen gebildete Ringschulter ausgebildet ist, und daß die Vorspannfeder (5) über einen Druckring (9) auf diese Ringschulter drückt.

9. Überlast-Rutschkupplung nach einem der Ansprüche 1 bis 6, **dadurch gekennzeichnet**, daß das Rastmittel (6) eine drehmomentabhängig auslösende Verzahnung ist.

10. Überlast-Rutschkupplung nach einem der Ansprüche 1 bis 6, **dadurch gekennzeichnet**, daß das Rastmittel (6) eine drehmomentabhängig auslösende Reibschlußverbindung ist.

## Claims

1. An overload safety clutch, in which torque is transmitted between a drive element (2) and a driven shaft (3) via a non-positive connection which is formed by a prestressed spring (5), the spring force of which is adjustable, **characterised in that** the drive element (2) cooperates with a drive shaft (7), which is guided coaxially with the driven shaft (3) and which is non-positively connected to the driven shaft (3) by a latching means (6) provided between the two shafts (3, 7), wherein the latching means (6) is loaded by the prestressed spring (5), which is supported firstly on the drive element (2) and secondly on the latching means (6), and the prestressing force of the spring (5) can be adjusted during operation, according to the applied driving torque. by an axial displacement of the drive element (2) which is guided on the drive shaft (3).

2. An overload safety clutch according to claim 1, **characterised in that** the drive element (2) or the drive shaft (7) is fitted with a predetermined inertial mass (8),

3. An overload safety clutch according to claim 1, **characterised in that** the axial displaceability between the drive element (2) and the drive shaft (7) is loaded by a damping means (11; 50).

4. An overload safety clutch according to any one of the preceding claims. **characterised in that** the drive element (2) acts on the drive shaft (7) via a guide (4).

5. An overload safety clutch according to claim 4, **characterised in that** the guide (4) is a motional screw thread without self-locking.

6. An overload safety clutch according to claim 4, **characterised in that** the guide (4) is a connecting link.

7. An overload safety clutch according to any one of the preceding claims. **characterised in that** the two shafts (3, 7) are guided coaxially and overlapping each other, wherein the driven shaft (3) is fitted into the drive shaft (7).

8. An overload safety clutch according to any one of the preceding claims. **characterised in that** the latching means (6) is constructed as an annular collar formed by balls, rolls or rollers and that the prestressed spring (5) presses on this annular collar via a pressure ring (9).

9. An overload safety clutch according to any one of claims 1 to 6, **characterised in that** the latching means (6) is a denticulation which is disengaged depending on the torque.

10. An overload safety clutch according to any one of claims 1 to 6, **characterised in that** the latching means (6) is a frictional connection which is disengaged depending on the torque.

## Revendications

1. Accouplement à friction de surcharge, dans lequel la transmission du couple de rotation entre un élément menant (2) et un arbre mené (3), s'effectue par un assemblage à force, qui est produit par un ressort (5) précontraint dont la force est réglable, caractérisé en ce que l'élément menant (2) coopère avec un arbre menant (7), qui est guidé coaxialement à l'arbre mené (3) et qui est relié à force avec l'arbre mené (3), par un moyen d'encliquetage (6) prévu entre les deux arbres (3, 7), le moyen d'encliquetage (6) étant sollicité par le ressort (5) précontraint, qui prend appui d'une part contre l'élément menant (2) et d'autre part contre le moyen d'encliquetage (6), et la force de précontrainte du ressort (5) étant réglable par un coulissement axial de l'élément menant (2), guidé sur l'arbre menant (3), pendant le fonctionnement, en fonction du couple de rotation d'entraînement s'appliquant.

2. Accouplement à friction de surcharge selon la revendication 1, caractérisé en ce que l'élément menant (2) ou l'arbre menant (7) est équipé d'une masse d'inertie (8) donnée.

3. Accouplement à friction de surcharge selon la revendication 1, caractérisé en ce que la possibilité de coulissement axial entre l'élément menant (2) et l'arbre menant (7) est soumise à un amortissement (11:50).

4. Accouplement à friction de surcharge selon l'une des revendications précédentes, caractérisé en ce que l'élément menant (2) agit sur l'arbre menant (7), par un guidage (4).

5. Accouplement à friction de surcharge selon la revendication 4, caractérisé en ce que le guidage (4) est un filetage de mouvement sans auto-blocage.

6. Accouplement à friction de surcharge selon la revendication 4, caractérisé en ce que le guidage (4) est une coulisse.

7. Accouplement à friction de surcharge selon l'une des revendications précédentes, caractérisé en ce que les deux arbres (3, 7) sont guidés coaxialement en se chevauchant l'un l'autre, l'arbre mené (3) étant ajusté dans l'arbre menant (7).

8. Accouplement à friction de surcharge selon l'une des revendications précédentes, caractérisé en ce que le moyen d'encliquetage (6) se présente sous la forme d'un épaulement annulaire formé par des billes, des rouleaux ou des cylindres, et en ce que le ressort de précontrainte (5) presse sur cet épaulement annulaire, par l'intermédiaire d'une bague de pression (9).

9. Accouplement à friction de surcharge selon l'une des revendications 1 à 6, caractérisé en ce que le moyen d'encliquetage (6) est une denture se désengageant en fonction du couple de rotation.

10. Accouplement à friction de surcharge selon l'une des revendications 1 à 6, caractérisé en ce que le moyen d'encliquetage (6) est un assemblage par friction se désengageant en fonction du couple de rotation.
